# EUROPÄISCHE PATENTANMELDUNG

(11) **EP 4 421 570 A1**
(43) Veröffentlichungstag der Anmeldung: **28.08.2024**
(21) Anmeldenummer: 23157795.8
(22) Anmeldetag: 21.02.2023
(51) Int. Cl.: G05B 13/02, G05B 15/02

(54) **VERFAHREN UND VORRICHTUNG ZUR REGELUNG EINES ODER MEHRERER BETRIEBSMITTEL EINES ENERGIESYSTEMS**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Es wird ein Verfahren zur Regelung eines Betriebsmittels (2) eines Energiesystems (3) vorgeschlagen, welches dadurch gekennzeichnet ist, dass das Energiesystem (3) ein Energiemanagementsystem zur übergeordneten Regelung des Energiesystems (3) und eine Regeleinheit (1) zur untergeordneten Regelung des Betriebsmittels (2) aufweist, wobei das Energiemanagementsystem (3) gemäß einer ersten Zykluszeit Sollwerte für das Betriebsmittel (2) und/oder weitere Komponenten (2) des Energiesystems (3) in den jeweiligen Zeitbereichen ermittelt, und die Regeleinheit (1) den jeweiligen ermittelten Sollwert als Sollwert seiner Regelung für den jeweiligen Zeitbereich verwendet, wobei die Regelung des Betriebsmittels (2) durch die Regeleinheit (1) innerhalb der Zeitbereiche gemäß einer bezüglich der ersten Zykluszeit kleineren zweiten Zykluszeit erfolgt.

Weiterhin betrifft die Erfindung eine Regeleinheit (1) zur Regelung eines Betriebsmittels (2) eines Energiesystems (3).

## Beschreibung

Die Erfindung betrifft ein Verfahren gemäß dem Oberbegriff des Patentanspruches 1 sowie eine Vorrichtung gemäß dem Oberbegriff des Patentanspruches 10.

Übergeordnete, modellbasierte Energiemanagementsysteme (abgekürzt EMS) bieten eine technische Möglichkeit, die Betriebsführung dezentraler Energiesysteme, umfassen mehrere Betriebsmittel, zu verbessern. Betriebsmittel der Energiesysteme sind insbesondere Energiewandlungsanlagen, beispielsweise Erzeuger, Speicher, Lasten und/oder Konverter.

Durch ein bezüglich des Energiesystems zentrales EMS werden die Betriebsmittel auf vorab durch das EMS ermittelte Arbeitspunkte/Sollwerte eingeregelt. Hierzu wird im Rahmen des EMS ein Systemmodell des Energiesystems erstellt, welches die Grundlage für ein mathematisches Optimierungsproblem zur Bestimmung der Sollwerte/Sollwert-Trajektorien für jedes Betriebsmittel ist. Zusätzlich werden in diesem Systemmodell ebenfalls Systemzustände berechnet, beispielsweise einer Leistung an einem Netzanschlusspunkt des Energiesystems, die sich durch die Vorgabe der Sollwerte an den einzelnen Betriebsmitteln ausbildet.

Aufgrund der hohen Komplexität der Optimierung und der daraus resultierenden Rechenzeiten, können bekannte Energiemanagementsysteme nicht auf zeitlich stark variierende Erzeugungen/Lasten (volatile Erzeugung/Last) reagieren. Dies kann zu einer suboptimalen Betriebsführung des Energiesystems führen. Schwankungen von stark volatilen Erzeugern und Lasten liegen typischerweise im Minuten- oder Sekundenbereich, während typische Zykluszeiten von Energiemanagementsystemen im Bereich von 5 Minuten bis einer Stunde liegen.

Zusätzlich sind die Schwankungen stark volatiler Betriebsmittel schwer vorherzusagen und können dadurch nicht adäquat berücksichtigt werden.

Weiterhin führen Modellvereinfachungen und ungenaue Modellparameter, beispielsweise Wirkungsgradabnahmen oder Kapazitätsabnahmen aufgrund von Alterung, zu weiteren, unvorhergesehenen Abweichungen.

Der vorliegenden Erfindung liegt die Aufgabe zugrunde, die Regelung eines Energiesystems im Rahmen eines Energiemanagementverfahrens, insbesondere im Hinblick auf volatile Erzeugung und Lasten, zu verbessern.

Die Aufgabe wird durch ein Verfahren mit den Merkmalen des unabhängigen Patentanspruches 1 sowie durch eine Regeleinheit mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Regelung eines Betriebsmittels eines Energiesystems, ist gekennzeichnet dadurch, dass das Energiesystem ein Energiemanagementsystem zur übergeordneten Regelung des Energiesystems und eine Regeleinheit zur untergeordneten Regelung des Betriebsmittels aufweist, wobei das Energiemanagementsystem gemäß einer ersten Zykluszeit Sollwerte für das Betriebsmittel und/oder für weitere Komponenten des Energiesystems in den jeweiligen Zeitbereichen ermittelt, und die Regeleinheit den jeweiligen ermittelten Sollwert als Sollwert seiner Regelung für den jeweiligen Zeitbereich verwendet, wobei die Regelung des Betriebsmittels durch die Regeleinheit innerhalb der Zeitbereiche gemäß einer bezüglich der ersten Zykluszeit kleineren zweiten Zykluszeit erfolgt.

Aus struktureller Sicht definiert, insbesondere der IPCC Fifth Assessment Report, ein Energiesystem als: "Alle Komponenten, die sich auf die Erzeugung, Umwandlung, Lieferung und Nutzung von Energie beziehen" (Annex I, Seite 1261).

Energiesysteme umfassen typischerweise mehrere Betriebsmittel/Komponenten, insbesondere energietechnische Anlagen, beispielsweise Energiewandlungsanlagen, Verbrauchsanlagen und/oder Speicheranlagen. Energiesysteme können mehrere Energieformen erzeugen und/oder bereitstellen (multimodale Energiesysteme). Insbesondere stellt ein multimodales Energiesystem für einen Energieverbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung gekoppelt.

Als Betriebsmittel kann das Energiesystem eine oder mehrere der folgenden Anlagen/Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Batteriespeicher, Biomasseanlagen, Biogasanlagen, Müllverbrennungsanlagen, industrielle Anlagen, konventionelle Kraftwerke und/oder dergleichen.

Gemäß dem erfindungsgemäßen Verfahren erfolgt eine übergeordnete (zentrale) Regelung des Energiesystems und seiner Betriebsmittel durch ein Energiemanagementsystem. Hierbei stellt das Energiemanagementsystem nach einer entsprechenden Optimierung (Lösen des Optimierungsproblems) für die Betriebsmittel und/oder weitere Komponenten jeweilige Sollwerte für einen oder mehrere Zeitbereiche bereit. Beispielsweise ist der Netzanschlusspunkt des Energiesystems eine solche weitere Komponente, da nicht unmittelbar die Leistung am Netzanschlusspunkt durch das Energiemanagementsystem geregelt wird, sondern lediglich mittelbar durch eine entsprechende Regelung der Betriebsmittel eine Regelung der Leistung am Netzanschlusspunkt erfolgen kann. Mit anderen Worten sind die weiteren Komponenten bevorzugt Komponenten, die nicht unmittelbar durch die Betriebsmittel eingeregelt werden können. Grundsätzlich kann das Energiemanagementsystem für die unmittelbar regelbaren Betriebsmittel sowie für die mittelbar regelbaren Komponenten Sollwerte ermitteln.

Die Regelung des Energiesystems durch das übergeordnete Energiemanagementsystem erfolgt gemäß der ersten Zykluszeit, die typischerweise 15 Minuten beträgt. Mit anderen Worten werden gemäß der ersten Zykluszeit die Berechnungen des Energiemanagementsystems mit neuen Daten bezüglich des Systemzustandes wiederholt. Die Zeitbereiche sind in diesem Beispiel somit 15 Minuten lang.

Gemäß der Erfindung erfolgt innerhalb der Zeitbereiche die Regelung des wenigstens einen Betriebsmittels durch die Regeleinheit. Hierbei erfolgt die Regelung durch die Regeleinheit basierend auf dem durch das Energiemanagementsystem ermittelten Sollwert, das heißt diese verwendet den durch das EMS ermittelten Sollwert. Dieser Sollwert ist nicht zwingend ein Sollwert für das Betriebsmittel, sondern kann ebenfalls ein Sollwert einer weiteren Komponente sein, beispielsweise des Netzanschlusspunktes. Allerdings kann das EMS auch einen Sollwert für das Betriebsmittel vorgeben, der dann durch die Regeleinheit ebenfalls zur Regelung des Betriebsmittels über das Bestimmen einer Abweichung verwendet wird. Die erfindungsgemäße Regeleinheit bildet somit eine bezüglich des Energiemanagementsystems untergeordnete Regelung aus.

Erfindungsgemäß erfolgt die Regelung durch die Regeleinheit gemäß der zweiten Zykluszeit, die kürzer als die erste Zykluszeit ist. Mit anderen Worten weist die Regelung der Regeleinheit eine kleinere zeitliche Auflösung als die übergeordnete Regelung durch das Energiemanagementsystem auf. Eine kontinuierliche Regelung durch die Regeleinheit kann ebenfalls vorgesehen sein, wobei hierbei die zweite Zykluszeit gegen den Wert Null strebt. Aufgrund der kürzeren zweiten Zykluszeit kann die Regeleinheit schneller auf Schwankungen bezüglich Last oder Erzeugung reagieren. Mit anderen Worten kann auf unvorhergesehene und/oder unterzyklische (bezüglich der ersten Zykluszeit) Last- oder Erzeugungsschwankungen reagiert werden. Dadurch kann ein verbesserter und effizienterer Betrieb des Energiesystems erreicht werden.

Nach dem Stand der Technik können bestimmte Ergebnisse des Energiemanagementsystems aufgrund der zu großen ersten Zykluszeit nicht unmittelbar durch die Betriebsmittel eingeregelt werden. Dies ist, wie obenstehend bereits genannt, beispielsweise für die Leistung (Wirkleistung und/oder Blindleistung) am Netzanschlusspunkt des Energiesystems der Fall. Die Wirkleistung am Netzanschlusspunkt ist die Summe aus Erzeugungsleistungen und Verbrauchsleistungen innerhalb des Energiesystems. Das gilt ebenso für die Blindleistung am Netzanschlusspunkt.

Die vorliegende Erfindung löst das genannte Problem dadurch, dass die Regeleinheit mit einer bezüglich der ersten Zykluszeit kürzeren zweiten Zykluszeit zur Regelung vorgesehen ist. Die Regeleinheit regelt hierbei wenigstens die Leistung eines der Betriebsmittel derart, dass deren Betrieb das Erreichen beziehungsweise Einhalten des Sollwertes am Netzanschlusspunkt dient. In diesem Sinne liegt der Regelung durch die Regeleinheit der durch das Energiemanagementsystem ermittelte und bereitgestellte Sollwert zugrunde. Die Regeleinheit verwendet diesen Sollwert als Sollwert und regelt das Betriebsmittel entsprechend. Hierbei kann die Regeleinheit einen weiteren für das Betriebsmittel durch das EMS bestimmten Sollwert berücksichtigten und lediglich eine Abweichung derart ermitteln, dass der ermittelte Sollwert der lediglich mittelbaren Komponente eingehalten werden kann. Dadurch kann eine mittelbare Regelung der am Netzanschlusspunkt gegebenenfalls stark variierenden Leistung erreicht werden. Mit anderen Worten können durch die vorliegende Erfindung stark volatile Größen, wie beispielsweise die Leistung an einem Netzanschlusspunkt, mit einer der zweiten Zykluszeit entsprechend hohen Geschwindigkeit geregelt werden.

Die Regeleinheit kann für Systeme mit einer Stell- und einer Messgröße angewendet werden. Stellgrößen können Sollwerte von steuerbaren Betriebsmitteln innerhalb des Energiesystems, beispielsweise Batteriespeicher, Wärmepumpen und/oder Ladestationen sein. Die Regeleinheit versucht mittels der Stellgröße die Regelgröße einzuregeln.

Die Regeleinheit hat erfindungsgemäß deutlich kürzere Zykluszeiten (zweite Zykluszeit) als das Energiemanagementsystem (erste Zykluszeit). Die Regeleinheit ermittelt basierend auf einer Regelabweichung zwischen Soll- und Messwert eine Sollwertanpassung. Diese Sollwertanpassung kann auf die originale Vorgabe des Energiemanagementsystems addiert werden. Alternativ ist denkbar, dass die unterlagerte Regeleinheit die Sollwertvorgabe des Energiemanagementsystems überschreibt. Hierbei sind jedoch starke Sprünge der Stellgröße wahrscheinlich, was zur Instabilität des Regelkreises führen kann.

Die vorliegende Erfindung weist weiterhin einen oder mehrere der folgenden Vorteile auf:
- Eine schnellere Reaktion auf energiesysteminterne Last- und Erzeugungsschwankungen;
- Mittelbare Regelung übergeordneter Komponenten/Messpunkte, die nicht unmittelbar durch ein Betriebsmittel eingestellt werden, beispielsweise eine Leistung an einem Netzanschlusspunkt;
- Die erfindungsgemäße synergetische Kombination aus optimaler Betriebsführung (EMS) und untergelagerter Regelung (Regeleinheit) führt zu einer verbesserten Betriebsführung des Gesamtsystems verglichen mit der Regelung durch jeweils getrennte, unabhängige Systeme;
- Durch das Nutzen der Flexibilität des Betriebsmittels durch die Regeleinheit, beispielsweise der Flexibilität eines Batteriespeichers, wird die Wirtschaftlichkeit des energetischen Gesamtsystems verbessert; und
- In Ländern, in denen eine Netzeinspeisung verboten ist, beispielsweise in Spanien oder Brasilien, kann eine Abregelung der am Standort befindlichen erneuerbaren Erzeugung, beispielsweise einer Photovoltaikanlage vermieden werden und stattdessen durch Nutzung eines Batteriespeichers mehr erneuerbar erzeugte Energie im Sinne einer Eigenstromnutzung verwendet werden. Entsprechend erhöht sich die Nachhaltigkeit und Effizienz des Energiesystems beziehungsweise des Gesamtsystems.

Die Erfindung ist insbesondere bei dynamischen elektrischen Systemen vorteilhaft. Bei rein thermischen Systemen können die Zeitkonstanten des Systems so groß sein, beispielsweise aufgrund der thermischen Trägheit von Rohrleitungen sowie die Verwendung von Pufferspeichern, dass ein übergeordnetes Energiemanagementsystem (zentrale modellprädikative Regeleinheit) bereits ausreichend sein kann.

Für multimodale Energiesysteme, die beispielsweise elektrische und thermische Teilsysteme koppeln, ist eine erfindungsgemäße Kombination aus Energiemanagementsystem und untergelagerter Regeleinheit vorteilhaft, wobei die zeitlich schnellere Regeleinheit zur Regelung des elektrischen Teilsystems vorgesehen ist.

Die erfindungsgemäße Regeleinheit zur Regelung eines Betriebsmittels eines Energiesystems, wobei das Energiesystem ein Energiemanagementsystem zur übergeordneten Regelung des Energiesystems aufweist, ist dadurch gekennzeichnet, dass das Energiemanagementsystem gemäß einer ersten Zykluszeit Sollwerte für das Betriebsmittel und/oder weitere Komponenten des Energiesystems in den jeweiligen Zeitbereichen ermittelt, und die Regeleinheit dazu ausgebildet ist, den jeweiligen ermittelten Sollwert als Sollwert seiner Regelung für den jeweiligen Zeitbereich zu verwenden, wobei die Regeleinheit weiterhin dazu ausgebildet ist, das Betriebsmittel innerhalb der Zeitbereiche gemäß einer bezüglich der ersten Zykluszeit kleineren zweiten Zykluszeit zu regeln.

Insbesondere ist die Regeleinheit, das heißt der Regler für das wenigstens eine Betriebsmittel, als PID-Regler oder P-Regler ausgebildet.

Es ergeben sich zum erfindungsgemäßen Verfahren gleichartige, gleichwertige und gleichwirkende Vorteile und/oder Ausgestaltungen der erfindungsgemäßen Regeleinheit.

Gemäß einer vorteilhaften Ausgestaltung der Erfindung ist die zweite Zykluszeit um einen Faktor im Bereich von 0,01 bis 0,5 kleiner als die erste Zykluszeit ist.

Ist somit T1 die erste Zykluszeit und T2 die zweite Zykluszeit, dann liegt die zweite Zykluszeit bevorzugt im Bereich von 0,01 x T1 bis 0,5 x T2. Dadurch ist vorteilhafterweise sichergestellt, dass typische volatile Erzeugungen/Lasten durch die Regeleinheit erfassbar und regelbar sind. Beispielsweise beträgt die erste Zykluszeit des Energiemanagementsystems 10 Minuten. Somit ist eine erste Zykluszeit im Bereich von 6 Sekunden bis 5 Minuten vorteilhaft.

In einer vorteilhaften Weiterbildung der Erfindung ist eine der weiteren Komponenten ein Netzanschlusspunkt des Energiesystems, wobei als Sollwert die Wirkleistung und/oder die Blindleistung am Netzanschlusspunkt verwendet wird.

Dadurch kann vorteilhafterweise ein verbesserter netzdienlicher Betrieb des Energiesystems ermöglicht werden. Insbesondere kann dadurch das Einhalten von Netzrandbedingungen, wie beispielsweise maximale Wirkleistungen und/oder Blindleistungen und/oder Mittelwerte der genannten Leistungen, beispielsweise über 15 Minuten, am Netzanschlusspunkt des Energiesystems, unterstützt werden.

Hierbei wird gemäß einer vorteilhaften Ausgestaltung der Erfindung für die Regelung der Wirkleistung und/oder Blindleistung des Netzanschlusspunktes eine aktuelle Wirkleistung beziehungsweise eine aktuelle Blindleistung am Netzanschlusspunkt erfasst, wobei das Erfassen mit einer dritten Zykluszeit erfolgt, die kleiner oder gleich der zweiten Zykluszeit ist.

Dadurch können vorteilhafterweise Schwankungen der Wirkleistung und/oder Blindleistung durch die Regeleinheit berücksichtigt werden.

Gemäß einer vorteilhaften Ausgestaltung der Erfindung umfasst das Betriebsmittel wenigstens zwei Teilbetriebsmittel, und die Regeleinheit für jede der Teilbetriebsmittel weist eine Teilregeleinheit auf, wobei die Teilbetriebsmittel durch die Teilregeleinheiten derart geregelt werden, dass der ermittelte Sollwert für die Betriebsmittel und/oder die Komponente möglichst erreicht wird.

Mit anderen Worten erfolgt durch die Regeleinheit beziehungsweise die Teilregeleinheiten eine kaskadierte Regelung. Dadurch können mehrere Mess- und Stellgrößen kaskadiert und aufeinander abgestimmt verwendet.

Beispielsweise umfasst das Energiesystem zwei Teilbatterien, die zusammen einen Batteriespeicher bilden. Auf der ersten Regelstufe der Regeleinheit wird ein Gesamtsollwert für die zwei Teilbatterien basierend auf den durch das Energiesystem vorgegebenen Sollwert ermittelt. Auf der zweiten Regelstufe der Regeleinheit erfolgt durch die Teilregeleinheiten eine Leistungsaufteilung der Gesamtleistung (Gesamtsollwert) auf die zwei Teilbatterien. Die genannte Aufteilung auf die zweite Teilbatterie kann bevorzugt gemäß einer der folgenden exemplarischen Möglichkeiten erfolgen:
- Beispielsweise wird die vom EMS ursprünglich ermittelte Aufteilung beibehalten. Wenn die Batterien beispielsweise mit 5 kW und 10 kW geladen werden sollen, und beispielsweise eine PV-Leistung kurzfristig um 3 kW ansteigt, so würden die Sollwerte auf 6 kW und 12 kW durch die Regeleinheit beziehungsweise die Teilregeleinheiten angepasst werden;
- Weiterhin könnten Prioritäten basierend auf den Wirkungsgraden der vorhandenen Stellgrößen verwendet werden. Wenn beispielsweise eine der Teilbatterie einen höheren Zyklenwirkungsgrad als die weitere Teilbatterie hat, dann wird die erst genannte entsprechend stärker beim Ausgleich von Prognoseabweichungen verwendet; und/oder
- Alternativ oder ergänzend kann durch die Regeleinheit versucht werden, einen charakteristischen Zustandswert, beispielsweise Ladezustand oder bereits erfolgte Volllastzyklen, zwischen den einzelnen Stellgrößen auszugleichen, das heißt wenn beispielsweise eine der Teilbatterien einen geringeren Ladezustand als die weitere Teilbatterie aufweist, wird die erst genannte entsprechend stärker bei Prognoseabweichungen aufgeladen.

In einer vorteilhaften Weiterbildung der Erfindung werden somit bei der Regelung der Teilbetriebsmittel die jeweiligen Wirkungsgrade und/oder jeweiligen Zustandsgrößen der Teilbetriebsmittel berücksichtigt.

Gemäß einer vorteilhaften Ausgestaltung der Erfindung werden ein ermittelter Sollwert, eine ermittelte zeitabhängige Sollwerttrajektorie, ein Gradient einer Sollwerttrajektorie und/oder eine Mehrzahl von Sollwerttrajektorien als Sollwert verwendet.

Mit anderen Worten kann ebenfalls eine Sollwerttrajektorie an die Regeleinheit durch das EMS weitergegeben werden. Weiterhin könnte das EMS einen Gradienten der Sollwerttrajektorie an die Regeleinheit übermitteln. Der Gradient kann für eine Einstellung der als P-Regler ausgebildete Regeleinheit verwendet werden. Zudem ist das Übermitteln einer ganzen Schar von Soll-Trajektorien, das heißt einer Mehrzahl von Sollwerttrajektorien vorgesehen. Dies kann für eine Mehrzahl von Einflussfaktoren erfolgen. Hierbei würde die verwendete Matrix der Sollwerte entsprechend vergrößert werden und der Gradient entspricht in diesem Fall einer Jacobimatrix.

In einer vorteilhaften Weiterbildung der Erfindung ist das Betriebsmittel als Batteriespeicher, als Wärmepumpe oder als Ladestation ausgebildet.

Dadurch kann insbesondere für das mittelbare Regeln der Wirkleistung und/oder Blindleistung an einem Netzanschlusspunkt eine vorteilhafte Flexibilität bereitgestellt werden.

Gemäß einer vorteilhaften Ausgestaltung der Erfindung umfasst das Energiesystem eine Photovoltaikanlage.

Mit anderen Worten ist die vorliegende Erfindung insbesondere für Energiesysteme mit Photovoltaikanlagen von Vorteil. Das ist deshalb der Fall, da Photovoltaikanlagen typische volatile Erzeuger sind. Die vorliegende Erfindung ermöglicht es auf die kurzen Zeitskalen der PV-Erzeugung durch die schnellere, untergeordnete Regeleinheit zu reagieren.

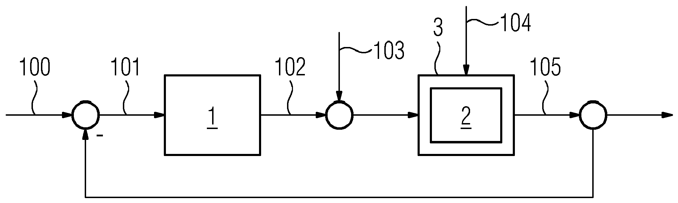

Weitere Vorteile, Merkmale und Einzelheiten der Erfindung ergeben sich aus den im Folgenden beschriebenen Ausführungsbeispielen sowie anhand der Zeichnung. Dabei zeigt schematisiert die Figur einen Regelkreis gemäß einer Ausgestaltung der vorliegenden Erfindung.

Gleichartige, gleichwertige oder gleichwirkende Elemente können in der Figur mit denselben Bezugszeichen versehen sein.

Die Figur zeigt einen Regelkreis beziehungsweise ein Verfahren zur Regelung eines Betriebsmittels 2 eines Energiesystems 3 gemäß einer Ausgestaltung der vorliegenden Erfindung.

Das Energiesystem 3 weist eine übergeordnete Regelung durch ein Energiemanagementsystem (EMS) sowie eine untergeordnete Regelung durch eine Regeleinheit 1 auf. Die übergeordnete Regelung durch das EMS erfolgt gemäß einer ersten Zykluszeit. Die untergeordnete Regelung durch die Regeleinehit 1 erfolgt gemäß einer zweiten Zykluszeit, die kürzer, insbesondere deutlich kürzer, als die erste Zykluszeit ist.

Das dargestellte Verfahren zur Regelung wird beispielshaft für ein als Batteriespeicher ausgebildetes Betriebsmittel 2 im Folgenden erläutert. Hierbei ist der Batteriespeicher 2, insbesondere bezüglich seiner Lade- und Entladeleistung, durch die Regeleinheit regelbar.

Das Energiemanagementsystem gibt als Sollwert die Wirkleistung an einem Netzanschlusspunkt des Energiesystems vor. Mit anderen Worten hat das Energiemanagementsystem, typischerweise durch eine numerische, mathematische Optimierung, einen Sollwert für die Wirkleistung am Netzanschlusspunkt für einen zukünftigen Zeitbereich, beispielsweise für die kommenden 15 Minuten, ermittelt. Das Bereitstellen des Sollwertes ist durch den Pfeil mit dem Bezugszeichen 100 gekennzeichnet. Weiterhin kann der durch das EMS ermittelte Sollwert durch die Regeleinheit 1 nicht unmittelbar geregelt werden. Er kann jedoch durch ein Regeln des Batteriespeichers 2 beeinflusst und somit geregelt werden.

Erfasst die Regeleinheit 1 nun eine Abweichung vom ermittelten Sollwert (symbolisiert durch den Pfeil 101), dann erfolgt eine Anpassung des Sollwertes für die Batterieleistung durch die Regeleinheit 1 (symbolisiert durch den Pfeil 102).

Die durch die Regeleinheit 1 ermittelte Anpassung der Batterieleistung wird auf den durch das EMS ermittelten Sollwert für die Batterieleistung (siehe Pfeil 100) addiert. Dies ergibt einen neuen Sollwert, gemäß dem der Batteriespeicher 2 geregelt wird. Hierbei ist die volatile Last/Erzeugung, beispielsweise durch eine Photovoltaikanlage des Energiesystems 3 durch den Pfeil 104 symbolisiert.

Nach der Regelung des Batteriespeichers 2 wird die Wirkleistung am Netzanschlusspunkt wieder durch eine Messeinrichtung erfasst und wenigstens an die Regeleinheit 1 übermittelt, woraufhin der dargestellte Regelkreis erneut von vorne beginnt. Mit anderen Worten wiederholt sich der dargestellte Regelkreis gemäß der zweiten Zykluszeit.

Beispielsweise weist eine aktuelle Erzeugung durch die Photovoltaikanlage einen Wert von 8 kW auf. Innerhalb des Energiesystems 3 bestehe eine Last von 10 kW. Das Ergebnis der Optimierung durch das EMS könnte beispielsweise sein, dass am Netzanschlusspunkt 0 kW anliegen, das heißt der Batteriespeicher 2 mit einer Leistung von 2 kW zur Deckung der energiesysteminternen Last von 10 kW entladen wird. Nimmt nun die PV-Leistung innerhalb des der Optimierung zugrunde gelegten Zeitbereiches um 1 kW ab, dann regelt die Regeleinheit 1 die Entladung des Batteriespeichers 2 derart, dass die Entladeleistung von 2 kW auf 3 kW erhöht wird. Dadurch kann der durch das EMS ermittelte Sollwert für den Netzanschluss von 0 kW eingehalten beziehungsweise erreicht werden. Dies wird durch die erfindungsgemäß kürzere zweite Zykluszeit ermöglicht. Bei einem Regelverfahren gemäß dem Stand der Technik würden aufgrund der variierenden PV-Erzeugung nun 1 kW über den Netzanschlusspunkt ausgespeist werden. Das vorliegende Verfahren beziehungsweise die vorliegende Regeleinheit 1 ermöglicht es somit, dass der durch das EMS ermittelte Sollwert am Netzanschlusspunkt eingehalten werden kann. Sollte anschließend im selben Zeitraum die Leistung der PV-Anlage um 1 kW steigen, dann würde die Entladeleistung der Batterie auf 1 kW durch die Regeleinheit 1 abgesenkt werden, sodass wiederum die Leistung am Netzanschlusspunkt beim Wert von 0 kW verbleibt.

Wie das erläuterte Ausführungsbeispiel verdeutlicht, ist die vom übergeordneten EMS (Modell-prädiktiven Regler) an die unterlagerte Regeleinheit 1 übergebene Information der Sollwert am Netzanschlusspunkt. Das Stellsignal für das Betriebsmittel, vorliegenden den Batteriespeicher 2, ergibt sich als Summe der Sollwertvorgabe des EMS und des unterlagerten Reglers 1. Das EMS bildet somit eine Vorsteuerung aus und der unterlagerte Regler 1 regelt um diesen Arbeitspunkt.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Regeleinheit
- 2: Betriebsmittel
- 3: Energiesystem
- 100: Sollwert der Wirkleistung am Netzanschlusspunkt
- 101: Abweichung
- 102: Anpassung Sollwert
- 103: Sollwert der Batterieleistung
- 104: Volatile Last/Erzeugung
- 105: Messwert

## Patentansprüche

1. Verfahren zur Regelung eines Betriebsmittels (2) eines Energiesystems (3), **gekennzeichnet dadurch, dass** das Energiesystem (3) ein Energiemanagementsystem zur übergeordneten Regelung des Energiesystems (3) und eine Regeleinheit (1) zur untergeordneten Regelung des Betriebsmittels (2) aufweist, wobei das Energiemanagementsystem (3) gemäß einer ersten Zykluszeit Sollwerte für das Betriebsmittel (2) und/oder weitere Komponenten (2) des Energiesystems (3) in den jeweiligen Zeitbereichen ermittelt, und die Regeleinheit (1) den jeweiligen ermittelten Sollwert als Sollwert seiner Regelung für den jeweiligen Zeitbereich verwendet, wobei die Regelung des Betriebsmittels (2) durch die Regeleinheit (1) innerhalb der Zeitbereiche gemäß einer bezüglich der ersten Zykluszeit kleineren zweiten Zykluszeit erfolgt.

2. Verfahren gemäß Anspruch 1, **gekennzeichnet dadurch, dass** die zweite Zykluszeit um einen Faktor im Bereich von 0,01 bis 0,5 kleiner als die erste Zykluszeit ist.

3. Verfahren gemäß Anspruch 1 oder 2, **gekennzeichnet dadurch, dass** eine der weiteren Komponenten ein Netzanschlusspunkt (2) des Energiesystems (3) ist, wobei als Sollwert die Wirkleistung und/oder Blindleistung am Netzanschlusspunkt (2) verwendet wird.

4. Verfahren gemäß Anspruch 3, **gekennzeichnet dadurch, dass** für die Regelung der Wirkleistung und/oder Blindleistung des Netzanschlusspunktes (2) eine aktuelle Wirkleistung beziehungsweise eine aktuelle Blindleistung am Netzanschlusspunkt (2) erfasst wird, wobei das Erfassen mit einer dritten Zykluszeit erfolgt, die kleiner oder gleich der zweiten Zykluszeit ist.

5. Verfahren gemäß einem der vorhergehenden Ansprüche, **gekennzeichnet dadurch, dass** das Betriebsmittel (2) wenigstens zwei Teilbetriebsmittel umfasst, und die Regeleinheit (1) für jedes der Teilbetriebsmittel eine Teilregeleinheit aufweist, wobei die Teilbetriebsmittel durch die Teilregeleinheiten derart geregelt werden, dass der ermittelte Sollwert für die Betriebsmittel (2) und/oder die Komponente (2), möglichst erreicht wird.

6. Verfahren gemäß Anspruch 5, **gekennzeichnet dadurch, dass** bei der Regelung der Teilbetriebsmittel die jeweiligen Wirkungsgrade und/oder jeweilige Zustandsgrößen der Teilbetriebsmittel berücksichtigt werden.

7. Verfahren gemäß einem der vorhergehenden Ansprüche, **gekennzeichnet dadurch, dass** als ermittelten Sollwert eine ermittelte zeitabhängige Sollwerttrajektorie, ein Gradient einer Sollwerttrajektorie und/oder eine Mehrzahl von Sollwerttrajektorien verwendet wird/werden.

8. Verfahren gemäß einem der vorhergehenden Ansprüche, **gekennzeichnet dadurch, dass** das Betriebsmittel (2) als Batteriespeicher, als Wärmepumpe oder als Ladestation ausgebildet ist.

9. Verfahren gemäß einem der vorhergehenden Ansprüche, **gekennzeichnet dadurch, dass** das Energiesystem (3) eine Photovoltaikanlage umfasst.

10. Regeleinheit (1) zur Regelung eines Betriebsmittels (2) eines Energiesystems (3), wobei das Energiesystem (3) ein Energiemanagementsystem zur übergeordneten Regelung des Energiesystems (3) aufweist, **dadurch gekennzeichnet, dass** das Energiemanagementsystem (3) gemäß einer ersten Zykluszeit Sollwerte für das Betriebsmittel (2) und/oder weitere Komponenten (2) des Energiesystems (3) in den jeweiligen Zeitbereichen ermittelt, und die Regeleinheit (1) dazu ausgebildet ist, den jeweiligen ermittelten Sollwert als Sollwert seiner Regelung für den jeweiligen Zeitbereich zu verwenden, wobei die Regeleinheit (1) weiterhin dazu ausgebildet ist, das Betriebsmittel (2) innerhalb der Zeitbereiche gemäß einer bezüglich der ersten Zykluszeit kleineren zweiten Zykluszeit zu regeln.
